# EUROPÄISCHE PATENTANMELDUNG

(11) **EP 1 172 366 A2**
(43) Veröffentlichungstag der Anmeldung: **16.01.2002**
(21) Anmeldenummer: 01116620.4
(22) Anmeldetag: 12.07.2001
(51) Int. Cl.: C07F 7/02

(54) **Fluorierte Kupfersalze als Katalysator für die Trialkoxysilan-Synthese**

(30) Priorität: 13.07.2000 DE 10033964
(71) Anmelder: BASF AKTIENGESELLSCHAFT, 67056 Ludwigshafen (DE)
(72) Erfinder: Brand, Alexandra, Dr., 64291 Darmstadt (DE)
(74) Vertreter: Isenbruck, Günter, Dr.

(57) **Zusammenfassung**

Die Erfindung betrifft ein Verfahren zur Herstellung von Trialkoxysilanen durch Umsetzung von Siliziummetall mit einem Alkohol in einem inerten Lösungsmittel in Anwesenheit eines Kupferkatalysators, wobei als Kupferkatalysator ein Kupfersalz eingesetzt wird, dessen Anion mindestens ein nicht hydrolysierbares Fluorid-Atom aufweist, oder Mischungen davon mit anderen Salzen. Des weiteren betrifft die Erfindung die Verwendung dieses Kupferkatalysators zur Herstellung von Trialkoxysilanen durch Umsetzung von Siliziummetall mit einem Alkohol.

## Beschreibung

Die Erfindung betrifft ein Verfahren zur Herstellung von Trialkoxysilanen durch die Umsetzung von Siliziummetall mit einem Alkohol an fluorierten Kupfersalzen als Katalysatoren sowie die Verwendung von fluorierten Kupfersalzen als Katalysatoren in einem Verfahren zur Herstellung von Trialkoxysilanen.

Trialkoxysilane, aufgebaut aus einem Siliziumatom, an das drei Alkoxygruppen und ein Wasserstoffatom gebunden sind, sind sehr reaktiv und instabil. Sie gehen daher zahlreiche Reaktionen wie Additionen, Copolymerisationen, Copolykondensationen und Disproportionierungsreaktionen mit anderen organischen Verbindungen ein, wobei eine Reihe sehr nützlicher Substanzen erhalten werden. Diese dienen wiederum als Ausgangsprodukte für Silan-Kupplungsreagentien, Beschichtungsmittel, hitzeresistente Lacke oder zur Gewinnung von Monosilanen in hoher Reinheit für Halbleiteranwendungen.

Die Trialkoxysilane können über die direkte Umsetzung von Siliziummetall mit den entsprechenden Alkoholen bei Temperaturen von 150 bis 500°C unter Einsatz von kupferhaltigen Katalysatoren hergestellt werden (Direktsynthese). Dabei wird im allgemeinen die kupferhaltige Silizium-Kontaktmasse in einem inerten, flüssigen Reaktionsmedium suspendiert und bei Temperaturen von 150 bis 300°C durch Einleiten von flüssigem oder gasförmigem Alkohol zu den gewünschten Trialkoxysilanen umgesetzt. Bezüglich des Umsatzes an Siliziummetall und der Selektivität des Trialkoxysilans gegenüber dem als Nebenprodukt stehenden Tetraalkoxysilan hat sich Kupfer(I)-Chlorid als besonders geeigneter Katalysator gezeigt.

M. Okamoto et al., Catalysis Lett. 1995, 33, 421 bis 427 betrifft eine Untersuchung der Umsetzung von Siliziummetall mit Methanol in einem Silizium-Festbettreaktor an verschiedenen Kupferkatalysatoren. Es wurden die Kupferkatalysatoren Kupfer(I)oxid, Kupfer(II)oxid, Kupfer(II)acetat, Kupfer(II)formiat, Kupfer(II)phthalat, Kupfer(II)oxalat und Kupfer(I)chlorid verglichen. Dabei wurden für Kupfer(I)chlorid die höchsten Siliziumumsätze (88 %) und Selektivitäten für Trimethoxysilan gegenüber Tetramethoxysilan (98 %) gefunden.

Bei Einsatz von Kupfer(I)chlorid entsteht jedoch Salzsäure, die die Verwendung von teuren, korrosionsstabilen Materialien für die eingesetzten Reaktoren erforderlich macht. Des weiteren führt die Anwesenheit von Chlorid in der Reaktionsmischung und im Produkt zu einer Ausbeuteverminderung an Trialkoxysilan, da die Folgereaktion von Trialkoxysilan mit Alkoholen zu Tetraalkoxysilan durch Chlorid katalysiert wird. Die bei Einsatz von Kupfer(I)chlorid als Katalysator entstehende Salzsäure kann, bei Einsatz von Methanol als Alkohol, mit dem Methanol zu Methylchlorid und Wasser reagieren, wodurch Methanol als Ausgangsmaterial für die Trialkoxysilansynthese verlorengeht.

Aus diesen Gründen ist der Einsatz von Katalysatoren, die kein hydrolysierbares Halogenid enthalten, wünschenswert.

JP-A-05170773 betrifft die Herstellung von Trialkoxysilanen durch Umsetzung von Siliziummetall mit Alkohol in Anwesenheit von Kupferalkoxiden. Dabei werden halogenidfreie Produkte erhalten. Die Selektivität dieser Umsetzung beträgt 91 bis 92 %, die Umsetzung von Silizium beträgt jedoch lediglich 21 bis 32,4 %.

Eine Erhöhung der Selektivität und des Siliziumumsatzes wird bei dieser Umsetzung gemäß JP-A-06065257 durch Einsatz eines Kupferalkoxid-Katalysators in Kombination mit einem Metallhalogenid erreicht. Die Anwesenheit von Halogenid in der Reaktionsmischung und im Reaktionsprodukt hat jedoch die oben genannten Nachteile.

EP-A-0285133 betrifft die Herstellung von Trialkoxysilanen durch Umsetzung von Siliziummetall mit Alkoholen, wobei ein Kupfer(II)hydroxid-Katalysator eingesetzt wird. Bei dieser Umsetzung werden Siliziumumsätze von etwa 80 bis 90 mol-% erreicht und der Anteil an Tetraalkoxysilanen im Reaktionsgemisch beträgt etwa 5 bis 10 mol-%, bezogen auf das Silizium.

JP-A-10168084 betrifft die Herstellung von Trialkoxysilanen durch Umsetzung von Siliziummetall und Alkohol an einem Kupfer(II)oxid-Katalysator, der einen Wassergehalt von < 3000 ppm aufweist. Bei der Herstellung von Triethoxysilan wird ein Selektivitätskoeffizient für Trialkoxysilan von 85,2 mol-% und ein Siliziumumsatz von 91 Gew.-% erreicht. Der geringe Wassergehalt des eingesetzten Katalysators kann jedoch eine thermische Vorbehandlung des Katalysators und somit einen zusätzlichen Reaktionsschritt erfordern.

EP-A 0 517 398 betrifft ein Verfahren zur Herstellung von Alkoxysilanen der allgemeinen Formel (OR)ₙSiH₄₋ₙ, worin n=2, 3 oder 4 ist, durch Umsetzung von Silizium mit einer Lösung von Fluorwasserstoff oder einem zu Fluorwasserstoff hydrolysierbaren Salz in einem flüssigen primären oder sekundären Alkohol, gegebenenfalls unter Zugabe eines Kupferkatalysators. Der Einsatz von Fluorwasserstoff ist jedoch problematisch, da Fluorwasserstoff extrem toxisch ist und Glas angreift. Des weiteren ist es bei dieser Umsetzung erforderlich, der eigentlichen Umsetzung einen Vorbehandlungsschritt voranzustellen, da CuF₂ selbst als Katalysator unwirksam ist.

Aufgabe der vorliegenden Erfindung ist die Bereitstellung eines Kupferkatalysators für die Trialkoxysilansynthese, der eine hohe Selektivität für Trialkoxysilan gegenüber Tetraalkoxysilan und hohe Umsätze ermöglicht, ohne daß die Anwesenheit von hydrolysierbarem Halogenid erforderlich ist. Es soll auf eine zeitaufwendige Voraktivierung zur Generierung einer katalytisch aktiven Spezies verzichtet werden.

Die Lösung der Aufgabe geht aus von einem Verfahren zur Herstellung von Trialkoxysilanen durch Umsetzung von Siliziummetall mit einem Alkohol in einem inerten Lösungsmittel in Anwesenheit eines Kupferkatalysators.

Das erfindungsgemäße Verfahren ist dann dadurch gekennzeichnet, daß als Kupferkatalysator ein Kupfersalz eingesetzt wird, dessen Anion mindestens ein nicht hydrolysierbares Fluorid-Atom aufweist, oder Mischungen davon mit anderen Salzen.

Bevorzugt eingesetzte Anionen, die nicht hydrolysierbare Fluorid-Atome aufweisen, sind ausgewählt aus Fluorokomplexen des Kohlenstoffs, Schwefels, Phosphors und Bors. Dabei sind Trifluoroacetat, Trifluorosulfonat, Hexafluorophosphat und Tetrafluoroborat besonders bevorzugt. Ganz besonders bevorzugt werden Trifluoroacetat, Trifluorosulfonat und Tetrafluoroborat eingesetzt.

Bevorzugt werden die Kupfer(II)salze der nicht hydrolysierbare Fluorid-Atome aufweisenden Anionen eingesetzt.

Die Problematik der Korrosion der eingesetzten Apparaturen ist gegenüber dem Einsatz von Kupferchloriden als Katalysatoren deutlich vermindert. Da die eingesetzten Kupfersalze ausschließlich nicht hydrolysierbares Fluorid enthalten, können Glasapparaturen eingesetzt werden, ohne Gefahr, daß das Glas angegriffen wird.

Der Reaktionsaustrag der erfindungsgemäßen Umsetzung, Trialkoxysilan, ist gegenüber einer Weiterreaktion zu Tetraalkoxysilan deutlich stabilisiert, im Gegensatz zu Reaktionsausträgen, die mit Kupferchloriden erzeugt werden.

Die erfindungsgemäß eingesetzten Kupfersalze mit Anionen, die nicht hydrolysierbare Fluorid-Atome aufweisen, sind kommerziell erhältlich. Sie können beispielsweise durch Umsetzung von Kupfersalzen wie Cu(OH)₂ mit den entsprechenden Säuren wie Trifluoressigsäure, Trifluorsulfonsäure, Hexafluorophosphorsäure, Tetrafluorophosphorsäure oder Tetrafluoroborsäure erhalten werden.

Durch das erfindungsgemäße Verfahren werden hohe Siliziumumsätze und sehr gute Selektivitäten an Trialkoxysilan im Verhältnis zu Tetraalkoxysilan erreicht. Im allgemeinen werden Siliziumumsätze bei Reaktionsende von > 75 mol-% erreicht, bevorzugt von 80 bis 90 mol-%, besonders bevorzugt von 82 bis 90 mol-%. Dabei wird der Siliziumumsatz gemäß der folgenden Gleichung ermittelt: Si[mol] im Produkt/eingesetzte Siliziummenge∗100.

Die Selektivität an Trialkoxysilan gegenüber Tetraalkoxysilan ist im allgemeinen größer als 80 mol-%, bevorzugt 85 bis 95 mol-%. Dabei wird die Selektivität gemäß der folgenden Gleichung ermittelt: Trialkoxysilan[mol]/(Trialkoxysilan[mol] + Tetraalkoxysilan[mol]) ∗ 100. Eine Aktivierung des erfindungsgemäß eingesetzten Katalysators durch Reduktion oder durch eine thermische Behandlung bei hohen Temperaturen ist nicht erforderlich.

In einer weiteren Ausführungsform des erfindungsgemäßen Verfahrens werden neben den erfindungsgemäß eingesetzten Kupfersalzen, dessen Anionen nicht hydrolysierbare Fluorid-Atome enthalten, weitere Salze eingesetzt. Dabei kann es sich um Salze handeln, die selbst katalytisch aktiv sind oder um Additive zur Verbesserung der Reaktionsparameter.

Üblicherweise beträgt der Gehalt an weiteren Salzen im allgemeinen 0 bis 20 Gew.-%, bevorzugt von 0,5 bis 5 Gew.-%, bezogen auf das Kupfersalz, dessen Anion nicht hydrolysierbare Fluorid-Atome enthält.

Geeignete Salze, die selbst katalytisch aktiv sind, sind ausgewählt aus Cu₂O, CuO, Cu(OH)₂, CuCl, CuCl₂, Cu(ac)₂ und CuSO₄, bevorzugte Salze sind Cu₂O, CuO und Cu(OH)₂.

Neben hohen Siliziumumsätzen und einer sehr guten Selektivität an Trialkoxysilan im Verhältnis zu Tetraalkoxysilan zeichnet sich das erfindungsgemäße Verfahren durch sehr gute Produktbildungsraten an Trialkoxysilanen aus.

Die Menge an eingesetztem Kupfersalz, dessen Anion nicht hydrolysierbare Fluorid-Atome aufweist, in dem erfindungsgemäßen Verfahren ist variabel. Im allgemeinen werden 0,0001 bis 0,05 mol, bevorzugt von 0,0005 bis 0,005 mol, besonders bevorzugt 0,001 bis 0,005 mol des Katalysators pro mol Siliziummetall eingesetzt.

Der in dem erfindungsgemäßen Verfahren eingesetzte Alkohol ist im allgemeinen ein einwertiger Alkohol. Bevorzugt wird ein Alkohol ROH eingesetzt, worin R eine Alkylgruppe mit 1 bis 6 Kohlenstoffatomen darstellt. Dabei kann die Alkylgruppe verzweigt oder unverzweigt sein, bevorzugt ist sie unverzweigt. Bevorzugt weist die Alkylgruppe des eingesetzten Alkohols 1 bis 3 Kohlenstoffatome auf, besonders bevorzugt werden Methanol oder Ethanol eingesetzt, ganz besonders bevorzugt wird Methanol eingesetzt, so daß das ganz besonders bevorzugt hergestellte Produkt Trimethoxysilan ist. Üblicherweise wird der Alkohol flüssig oder gasförmig in eine Reaktionsmischung aus Reaktionsmedium, Siliziummetall und Katalysator eingeleitet.

Der Alkohol wird im allgemeinen kontinuierlich im Überschuß zu dem vorgelegten Siliziummetall zudosiert (sogenanntes Semibatch-Verfahren). Dabei hängt das genaue Verhältnis von Alkohol zu Siliziummetall unter anderem von der gewünschten Aufarbeitungsweise ab, da manchmal ein zu hoher MeOH-Gehalt im Produkt vermieden werden muß.

Als Siliziummetall kann grundsätzlich jedes kommerziell erhältliche Produkt eingesetzt werden. Eine typische, für das erfindungsgemäße Verfahren geeignete, Zusammensetzung eines kommerziellen Produktes enthält etwa > 98 bis 99 Gew.-% Si, < 1 Gew.-% Fe, etwa 0,05 bis 0,7 Gew.-% Al, etwa 0,001 bis 0,1 Gew.-% Ca, < 0,001 Gew.-% Pb und < 0,1 Gew.-% Wasser. Übliche durchschnittliche Quandurchmesser betragen 45 bis 600 µm, bevorzugt 75 bis 300 µm. Im allgemeinen sind kleine Korndurchmesser des Siliziummetalls bevorzugt, da sie einfacher zu dispergieren sind und schneller reagieren.

Für das erfindungsgemäße Verfahren geeignete inerte Lösungsmittel sind thermisch stabile Lösungsmittel, die sich unter den für das erfindungsgemäße Verfahren notwendigen hohen Temperaturen nicht zersetzen. Bevorzugte Lösungsmittel sind hochtemperaturstabile organische Lösungsmittel, die üblicherweise als Wärmeaustauschmedien genutzt werden. Die Art des eingesetzten Lösungsmittels beeinflußt die Umsetzung von Siliziummetall mit Alkohol an Kupferkatalysatoren erheblich. Bevorzugt geeignete Lösungsmittel sind Therminol® 59, Therminol® 60, Therminol® 66, Dowtherm® HT, Marlotherm® S, Marlotherm® L, Diphenylether, Diphenyl, Therphenyl und alkylierte Benzole, alkylierte Diphenyle und alkylierte Therphenyle sowie Reaktionsmedien, die Diphenylalkane enthalten, wie sie gemäß der nicht vorveröffentlichten deutschen Anmeldung mit dem Aktenzeichen 19962571.9 offenbart sind. Die genannten Lösungsmittel weisen Siedepunkte bei Normaldruck auf, die höher als etwa 250°C sind. Unter Therminol® 59 ist dabei ein Produkt der Monsanto Company zu verstehen, wobei es sich (gemäß Sicherheitsdatenblatt) um ein Gemisch auf Diphenylethan, Ethyldiphenylethan, Diethyldiphenylethan und Ethylbenzol handelt. Therminol® 60 ist eine Mischung aus polyaromatischen Verbindungen mit einem mittleren Molekulargewicht von 250. Die optimale Verwendungstemperatur von Therminol® 60 liegt im Bereich von -45 bis 315°C. Therminol® 66 und Dowtherm® HT sind Mischungen von hydrierten Therphenylen mit einem mittleren Molekulargewicht von 240. Ihre obere Temperaturgrenze liegt bei etwa 370°C. Marlotherm® S, Produkt der Hüls AG, ist eine Mischung isomerer Dibenzylbenzole und Marlotherm® L, Produkt der Hüls AG; ist eine Mischung isomerer Benzyltoluole. Besonders geeignete Lösungsmittel sind Therminol® 59, Therminol® 66, Marlotherm® S, Marlotherm® L sowie alkylierte Benzole, Tri-und Tetratoluole sowie Reaktionsmedien, die Diphenylalkane enthalten.

Die Alkylketten der Diphenylalkane haben im allgemeinen eine Kettenlänge von 3 bis 20 Kohlenstoffatomen, bevorzugt von 10 bis 14 Kohlenstoffatomen. Die Alkylketten können linear oder verzweigt sein. Bevorzugt werden Diphenylalkane mit linearen Alkylketten eingesetzt. Aus Preisgründen wird besonders bevorzugt ein Gemisch von Diphenylalkanen und Alkylketten von 10 bis 14 Kohlenstoffatomen als Reaktionsmedium eingesetzt.

Die Menge des verwendeten Lösungsmittels ist variabel. Normalerweise wird aus Kostengründen eine Zusammensetzung Silizium : Lösungsmittel zwischen 2:1 und 1:4, bevorzugt zwischen 2 : 1 und 1 : 2 angestrebt.

Ein Restgehalt von organischen Chlorverbindungen im Reaktionsmedium beeinträchtigt die Umsetzung nicht wesentlich. Dabei können Restgehalte von dem allgemeinen 0 bis 10000 ppm, bevorzugt von 1 bis 1000 ppm, besonders bevorzugt von 100 bis 500 ppm, bezogen auf das Reaktionsmedium, im Reaktionsmedium vorhanden sein. Diese organischen Chlorverbindungen haben keine erhöhte Korrosivität des Reaktionsmediums zur Folge.

Der Wassergehalt des Reaktionsmediums hat in kleineren Grenzen keinen Einfluß auf die Reaktion. Üblich sind Wassergehalte von 0 bis 1000 ppm, bevorzugt von 1 bis 100 ppm, besonders bevorzugt von 10 bis 50 ppm, bezogen auf das Reaktionsmedium. Größere Mengen an Wasser, welches z.B. durch den Alkohol eingetragen werden kann, äußern sich jedoch störend.

Die Umsetzung erfolgt im allgemeinen bei Temperaturen von 150 bis 300°C, bevorzugt von 180 bis 300°C. Eine Temperaturerhöhung führt dabei in einigen Fällen bei sonst gleichen Reaktionsbedingungen zu einer Verbesserung der Selektivität, d.h. zu einer Verbesserung des Verhältnisses von Trialkoxysilan zu dem als unerwünschtes Nebenprodukt entstehenden Tetraalkoxysilan. Der Reaktionsdruck ist nicht kritisch. Üblicherweise wird die Umsetzung bei Normaldruck durchgeführt.

In einer Ausführungsform des erfindungsgemäßen Verfahrens werden das inerte Lösungsmittel, das Siliziummetall und das erfindungsgemäß eingesetzte Kupfersalz als Katalysator, gegebenenfalls im Gemisch mit weiteren Salzen, in einen Reaktor gefüllt. Die Mischung wird im allgemeinen auf die gewünschte Reaktionstemperatur aufgeheizt und der Alkohol wird flüssig oder gasförmig in die Mischung eingeleitet. Nach Beendigung der Reaktion kann das Reaktionsmedium durch Filtration zurückgewonnen und wieder eingesetzt werden. Während der Reaktion kann in bestimmten Zeitabständen Siliziummetall nachdosiert werden. Dabei kann gleichzeitig Katalysator nachdosiert werden. Wird kein Katalysator nachdosiert, kann eine unkritische, geringfügige Abnahme der Reaktivität der Mischung festgestellt werden. Auf diese Weise kann mindestens die zehnfach Dosierung, bevorzugt die zehn- bis fünfzehnfache Dosierung des Siliziummetalls in Bezug auf die erste Dosierung in dem eingesetzten Reaktionsmedium umgesetzt werden.

Ein weiterer Gegenstand der vorliegenden Erfindung ist die Verwendung von Kupfersalzen, dessen Anionen mindestens ein nicht hydrolysierbares Fluorid-Atom aufweisen, oder Mischungen davon mit anderen Salzen als Katalysatoren zur Herstellung von Trialkoxysilanen durch Umsetzung von Siliziummetall mit einem Alkohol.

Die nachfolgenden Beispiele erläutern die Erfindung zusätzlich.

### Beispiele

### Herstellung von Trimethoxysilan

Allgemeine Vorschrift für alle im folgenden aufgeführten Beispiele:

500 ml Lösungsmittel, 200 g metallisches Silizium (durchschnittlicher Korndurchmesser 200 µm, Siliziumgehalt > 98 %) und ca. 0,02 - 0,01 Gew.-%, bezogen auf das Siliziummetall des Kupfersalzes, dessen Anion nicht hydrolysierbare Fluorid-Atome aufweist, werden in einen 500 ml-Glasreaktor gefüllt. Der Reaktor ist mit einem Thermometer, Kühler, Rührer und Einleitungsrohr für den Alkohol und für Stickstoff ausgestattet. Die Reaktionsmischung wird auf die in Tabelle 1 angegebene Reaktionstemperatur aufgeheizt, und Methanol wird flüssig zudosiert. Kurz nach dem Beginn der Methanoleinleitung beginnt an dem Kühler Produkt zu kondensieren. Die Zusammensetzung des Produkts wird mittels Gaschromatographie analysiert.

Um eine Vergleichbarkeit der Ergebnisse zu ermöglichen, wurde auf eine einheitliche Reaktionszeit von 22,5 h bilanziert. Zusätzlich wurde auch die Bilanz bis Reaktionsende betrachtet (nach 24 und 25,5 h, Methanol-Gehalt des Produkts 100 %). Der Reaktionsaustrag besteht aus einer rötlich-braunen Suspension, die filtriert wird. Das zurückerhaltene Lösungsmittel kann wieder eingesetzt werden.

Die Tabelle 1 zeigt die Reaktionsparameter und Versuchsergebnisse von erfindungsgemäßen Beispielen und Vergleichsbeispielen:
Darin bedeuten:
   - Bsp.:: Beispiel, Nummer des Versuchs
   - Temp.:: Reaktionstemperatur in °C
   - MeOH-Durchsatz:: Durchsatz an Methanol in g pro Minute und pro kg Silizium
   - Katalysator:: eingesetzter Katalysator und eingesetzte Menge des Katalysators in g pro kg Silizium
   - Si-Umsatz:: Molmenge Silizium im Produkt pro eingesetzte Molmenge Silizium in Prozent
   - Selektivität:: Verhältnis von Trimethoxysilan gegenüber Tetramethoxysilan: Trimethoxysilan [mol] / (Trimethoxysilan [mol] + Tetramethoxysilan [mol] ∗ 100

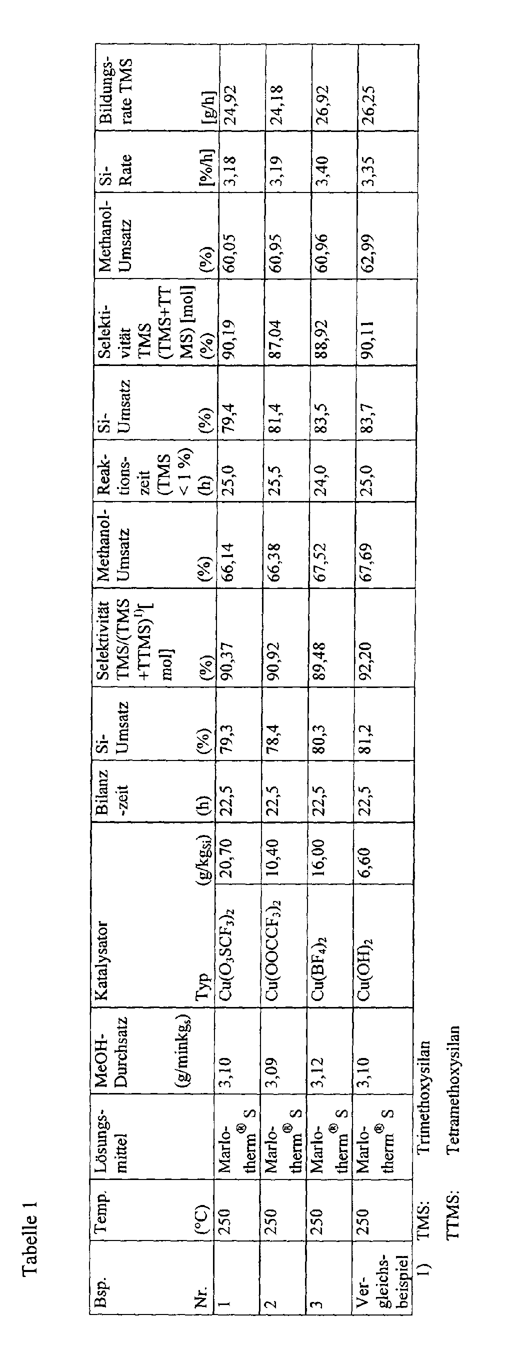

## Patentansprüche

1. Verfahren zur Herstellung von Trialkoxysilanen durch Umsetzung von Siliziummetall mit einem Alkohol in einem inerten Lösungsmittel in Anwesenheit eines Kupferkatalysators, **dadurch gekennzeichnet, daß** als Kupferkatalysator ein Kupfersalz eingesetzt wird, dessen Anion mindestens ein nicht hydrolysierbares Fluorid-Atom aufweist, oder Mischungen davon mit anderen Salzen.

2. Verfahren nach Anspruch 1, **dadurch gekennzeichnet, daß** das nicht hydrolysierbare Fluorid-Atome aufweisende Anion ausgewählt ist aus Trifluoroacetat, Trifluorosulfonat, Hexafluorophosphat und Tetrafluoroborat.

3. Verfahren nach Anspruch 1 oder 2, **dadurch gekennzeichnet, daß** die anderen Salze ausgewählt sind aus Cu₂O, CuO, Cu(OH)₂, CuCl, CuCl₂, Cu(ac)₂ und CuSO₄, wovon Cu₂O, CuO und Cu(OH)₂ bevorzugt sind.

4. Verfahren nach einem der Ansprüche 1 bis 3, **dadurch gekennzeichnet, daß** ein Alkohol ROH eingesetzt wird, worin R eine Alkylgruppe mit 1 bis 6 Kohlenstoffatomen darstellt.

5. Verfahren nach Anspruch 4, **dadurch gekennzeichnet, daß** der Alkohol Methanol ist.

6. Verfahren nach einem der Ansprüche 1 bis 5, **dadurch gekennzeichnet, daß** das inerte Lösungsmittel ausgewählt ist aus Therminol® 59, Therminol® 66, Marlotherm® S, Marlotherm® L, alkylierten Benzolen, Tri- und Tetratoluolen sowie Reaktionsmedien, enthaltend Diphenylalkane.

7. Verfahren nach einem der Ansprüche 1 bis 6, **dadurch gekennzeichnet, daß** die Umsetzung bei Temperaturen von 150 bis 300°C erfolgt.

8. Verwendung von Kupfersalzen, dessen Anionen mindestens ein nicht hydrolysierbares Fluorid-Atom aufweisen, oder Mischungen davon mit anderen Salzen als Katalysatoren zur Herstellung von Trialkoxysilanen durch Umsetzung von Siliziummetall mit einem Alkohol.
